**Europäisches Patentamt**

**European Patent Office**

**Office européen des brevets**

(19)

(11) Veröffentlichungsnummer : **0 107 020**
**B1**

(12) **EUROPÄISCHE PATENTSCHRIFT**

(45) Veröffentlichungstag der Patentschrift :
10.09.86

(51) Int. Cl.⁴ : **C 08 L 33/26**, C 08 K 3/26,
C 08 J 3/06

(21) Anmeldenummer : 83109158.2

(22) Anmeldetag : 16.09.83

(54) **Verfahren zur Erhöhung der Auflösungsgeschwindigkeit von feinteiligen, hochmolekularen (Meth)acrylamidpolymerisaten.**

(30) Priorität : 25.09.82 DE 3235527

(43) Veröffentlichungstag der Anmeldung :
02.05.84 Patentblatt 84/18

(45) Bekanntmachung des Hinweises auf die Patenterteilung : 10.09.86 Patentblatt 86/37

(84) Benannte Vertragsstaaten :
DE FR GB

(56) Entgegenhaltungen :
EP-A- 0 051 264
CH-A- 586 258
DE-A- 2 064 101
FR-A- 2 148 097
FR-A- 2 331 596
CHEMICAL ABSTRACTS, Band 96, Nr. 4, 25. Januar
1981, Seite 34, Nr. 96: 20902f, Columbus, Ohio, US

(73) Patentinhaber : BASF Aktiengesellschaft
Carl-Bosch-Strasse 38
D-6700 Ludwigshafen (DE)

(72) Erfinder : Heide, Wilfried, Dr.˙
Laerchenweg 4
D-6701 Erpolzheim (DE)
Erfinder : Schmitt, Karl
Gerhart-Hauptmann-Strasse 7
D-6710 Frankenthal (DE)
Erfinder : Hartmann, Heinrich, Dr.
Weinheimer Strasse 46
D-6703 Limburgerhof (DE)

## Beschreibung

Pulverförmige hochmolekulare Polymerisate auf Basis von Acrylamid werden in Form von verdünnten wäßrigen Lösungen, beispielsweise als Flockungsmittel in Kläranlagen oder auch als Retentions- und Flockungsmittel bei der Herstellung von Papier verwendet. Ein gewisser Nachteil der pulverförmigen Polymerisate auf Basis von (Meth)acrylamid ist darin zu sehen, daß die Herstellung verdünnter wäßriger Polymerlösungen aus den pulverförmigen Polymerisaten eine relativ lange Lösezeit erfordert. Außerdem muß man darauf achten, daß das Polymerisat beim Auflösen in Wasser nicht verklumpt.

Um die Klumpenbildung beim Auflösen von pulverförmigem Polyacrylamid in Wasser zu verhindern, ist es aus der DE-OS 26 47 078 bekannt, Acrylamidpolymerisate mit 10 bis 80 Gew.% eines festen Verdünnungsmittels, z. B. eines in Wasser löslichen Salzes, wie Natriumchlorid, Natriumsulfat, Soda, Natriumsulfit oder Magnesiumsulfat zu mischen und die Mischung anschließend in Wasser aufzulösen. Für die Auflösung des genannten Gemisches in Wasser wird etwa eben soviel Zeit benötigt wie beim langsamen und sorfältigen Eintragen des staubförmigen Materials in Wasser.

Aus der CH-PS 586 258 ist ein Verfahren zur Herstellung eines leicht in Wasser lösbaren organischen Flockungsmittelgranulates bekannt, bei dem man 100 Gewichtsteile eines festen, wasserlöslichen, als Flockungsmittel verwendbaren Hochpolymers mit 10 oder mehr Gewichtsteilen mindestens eines wasserlöslichen Salzes, wie Kochsalz oder Glaubersalz, in Gegenwart einer bestimmten Menge Wasser mischt. Diese Mischungen enthalten große Salzmengen, die für die Anwendung der Mischungen unerwünscht sind. Der hohe Salzgehalt in der Mischung beeinträchtigt außerdem die Rieselfähigkeit der Granulate, so daß diese Produkte in automatischen Dosieranlagen schlecht dosierbar sind.

Aus der DE-OS 27 49 295 ist ein Verfahren zur Herstellung von kationischen Polymeren bekannt, bei dem man beispielsweise mit Methylchlorid quaternisierte Salze von Dimethylaminoethylmethacrylat in Gegenwart von 7 bis 18 Gew.% Wasser, bezogen auf das Gesamtgewicht der Monomeren und Wasser, und etwa 10 bis 40 Gew.%, bezogen auf das Gesamtgewicht des Polymerisationssystems, eines pulverförmigen wasserlöslichen Salzes in Abwesenheit weiterer Medien einer wäßrigen Lösungspolymerisation unterwirft. Man erhält so ein kationisches Polymerisat in Form einer festen Masse, die leichter zu vermahlen ist als ein entsprechendes Polymerisat, das keine pulverförmigen wasserlöslichen Salze enthält. Die pulverförmigen, ein anorganisches Salz enthaltenden Mischungen lösen sich jedoch schneller in Wasser auf als die entsprechenden salzfreien Polymerisate der gleichen Teilchengröße. Die Anwesenheit von Salzen bei der Polymerisation beeinflußt zwar bei der Herstellung kationischer Polymerisate den Polymerisationsablauf kaum, führt jedoch bei der Herstellung anionischer Polymerisate zu einer unerwünschten Erniedrigung des Molekulargewichts der Polymerisate.

Aufgabe der Erfindung ist es, die Auflösungsgeschwindigkeit von feinteiligen, hochmolekularen (Meth)acrylamidpolymerisaten, die ggf. anionische Monomere einpolymerisiert enthalten, wobei die anionischen Gruppen der Polymerisate als Alkali- oder Erdalkalisalze vorliegen, in Wasser zu erhöhen.

Die Aufgabe wird erfindungsgemäß dadurch gelöst, daß man feinteilige, wasserlösliche Polymerisate, die als Gel vorliegen, einen Wassergehalt von 40 bis 90 Gew.-% und eine Teilchengröße von 50 bis 2 000 μm haben, mit 0,1 bis 8 Gew.-%, bezogen auf die Polymerisate, eines Alkali- und/oder Ammoniumcarbonats und/oder Alkali- und/oder Ammoniumhydrogencarbonats homogen mischt und die Mischung anschließend trocknet.

Hochmolekulare, feinteilige Polymerisate auf Basis von (Meth)acrylamid sind bekannt. Sie werden beispielsweise duch Polymerisieren der Monomeren in wäßriger Lösung oder nach dem Verfahren der umgekehrten Suspensionspolymerisation hergestellt. Die Homopolymerisate erhält man beispielsweise, indem man entweder Acrylamid oder Methacrylamid in Abwesenheit von anderen Monomeren polymerisiert. Copolymerisate werden dadurch hergestellt, daß man Acrylamid oder Methacrylamid zusammen mit einem oder mehreren anionischen Monomeren polymerisiert. Die anionischen Monomeren können bereits vor der Polymerisation mit Basen neutralisiert sein, z. B. mit Natronlauge, Kalilauge, wäßrigem Ammoniak oder auch mit Erdalkalimetallbasen und als Magnesium-, Calcium- oder Bariumsalz vorliegen. Geeignete anionische Monomere sind beispielsweise Acrylsäure, Methacrylsäure, Itakonsäure, Vinylsulfonsäure oder 2-Acrylamido-2-propansulfonsäure. Die anionischen Monomeren können auch nach der Polymerisation mit Alkali oder Erdalkalibasen neutralisiert werden. Die Polymerisate enthalten 0,5 bis 100 Gew.% Acrylamid oder Methacrylamid und 0,5 bis 100 Gew.% mindestens eines anionischen Monomeren. Vorzugsweise wird die Löslichkeit von Homopolymerisaten des Acrylamids und von Copolymerisaten des Acrylamids mit Natriumacrylat verbessert. Das Molekulargewicht der Polyacrylamide beträgt mindestens 1 000 000. Es kann auch mit Hilfe der K-Werte nach Fikentscher charakterisiert werden, die für die in Betracht kommenden hochmolekularen Polymerisate mindestens 200 betragen (gemessen 0,1 %ig in 5 %iger Kochsalzlösung bei 20 °C). Vorzugsweise werden diejenigen Polymerisate Erfindungsgemäß modifiziert, die nach dem Verfahren der umgekehrten Suspensionspolymerisation hergestellt werden. Ein derartiges Verfahren ist beispielsweise aus DE-AS 20 64 101 bekannt. Bei diesem Verfahren entstehen perlförmige Gele, die 40 bis 90 Gew.% Wasser enthalten. Sofern erforderlich, werden die Polymerisate zerkleinert. Dies ist besonders im Fall der nach dem Lösungspolymerisationsverfahren hergestellten Produkte erforderlich. Die Teilchengröße der hochmolekularen (Meth)-acrylamidpolymerisate beträgt 50 bis 2 000, vorzugsweise 100 μm bis 500 μm. Man kann jedoch auch wasserfreie, feinteilige (Meth)acrylamidpolymerisate mit einem Alkali- und/oder Ammonium(hydrogen)carbonat in Gegenwart von Wasser mischen.

Die feinteiligen (Meth)acrylamidpolymerisate, die noch Wasser enthalten, werden anschließend mit feinteiligem Alkali- und/oder Ammoniumcarbonat und/oder den entsprechenden Hydrogencarbonaten homogen gemischt. Die Teilchengröße der anorganischen Salze beträgt 10 μm bis 100 μm. Vorteilhafter ist es, anstelle der pulverförmigen anorganischen Salze wäßrige Lösungen der Salze zu verwenden. Die Konzentration der wäßrigen Salzlösungen beträgt ca. 5 Gew.% und reicht bis zur Sättigung. Geeignet sind beispielsweise Lithium-, Natrium-, Kalium-oder Ammoniumcarbonat sowie die entsprechenden Hydrogencarbonate oder Mischungen aus einem Carbonat und einem Hydrogencarbonat, z. B. Mischungen aus Natriumhydrogencarbonat und Natriumcarbonat oder Mischungen aus Ammoniumhydrogencarbonat und Natriumcarbonat. Vorzugsweise verwendet man eine wäßrige Natriumcarbonatlösung. Die Carbonate und/oder Hydrogencarbonate werden in einer Menge von 0,1 bis 8, vorzugsweise 0,2 bis 4 Gew.%, bezogen auf das Polymerisat, eingesetzt.

Salz und Polymerisat werden miteinander gemischt, z. B. durch Zumischen der Natriumcarbonatlösung zu einer Polymersuspension in Öl oder durch Zugabe der Salzlösung in einen Schaufeltrockner, in dem sich die Gelteilchen befinden. Auch wenn das anorganische Salz in wasserfreier Form mit dem Polymergel, das noch 40 bis 90 Gew.% Wasser enthält, in Kontakt gebracht wird, diffundiert es in das Polymergel, so daß man eine homogene Mischung erhält. Während des Vermischens kann die Temperatur in weiten Bereichen schwanken, sie liegt beispielsweise in dem Bereich von 5 bis 90 °C. Vorzugsweise werden die beiden Komponenten bei Raumtemperatur gemischt. Der Mischvorgang dauert etwa 1 bis 30 Minuten. Es ist wesentlich, daß das Ammonium- bzw. das Alkalisalz in dem Polymergel homogen verteilt ist. Danach wird die Mischung getrocknet. Hierzu kann man beispielsweise heiße Luft oder ein inertes Gas, z. B. Stickstoff oder Kohlendioxid, durch die zu trocknende feinteilige Mischung leiten, oder das Wasser durch Einwirkung von Mikrowellenstrahlung, Infrarot oder mit Hilfe anderer Wärmezufuhr, z. B. durch Beheizen der Kesselwand mit Dampf, unter vermindertem Druck abdestillieren. Vorzugsweise wird die Mischung getrocknet, indem man das Wasser daraus azeotrop abdestilliert. Als Schleppmittel können die üblichen organischen Lösungsmittel verwendet werden, die nicht mit dem Polymerisat reagieren und es nicht lösen, z. B. n-Hexan, Cyclohexan, Toluol, Xylol, Tetrachlorkohlenstoff, Tetrachlorethylen, Amylacetat oder Dibutylether. Ebenso ist möglich, Mischungen geeigneter inerter organischer Flüssigkeiten zu verwenden. Man kann dadurch die Temperatur so einregulieren, daß das Polymerisat beim Trocknen nicht geschädigt wird. Während der azeotropen Trocknung der Mischung tritt kein Agglomerieren der Teilchen ein. Die Mischung kann vollständig entwässert werden. Der Wassergehalt der Mischung beträgt nach dem Trocknen maximal 10 Gew.% und liegt vorzugsweise zwischen 4 und 8 Gew.%.

Nach dem azeotropen Trocknen kann das feinteilige Polymerisat durch einfaches Abtrennen von inerten organischen Lösungsmitteln erhalten werden. Das restliche, der Polymerisatmischung anhaftende Lösungsmittel kann beispielsweise durch Erwärmen, vorzugsweise unter vermindertem Druck, abdestilliert werden.

Die Polymerisate, die ein Alkalicarbonat und/oder Hydrogencarbonat nach einer der oben beschriebenen Verfahrensweisen homogen eingemischt enthalten und aus denen das Wasser entfernt ist, lösen sich wesentlich schneller auf als nach anderen Verfahren hergestellte wasserlösliche Salze enthaltende Polymerisate und vor allen Dingen wesentlich schneller als salzfreie Polymerisate der gleichen Teilchengröße.

Die (Meth)acrylamidpolymerisate, die Alkalicarbonat bzw. Hydrogencarbonat homogen eingemischt enthalten, werden für die gleichen Anwendungsgebiete verwendet, wie die salzfreien hochmolekularen Polymerisate, d. h. als Flockungsmittel, Retentionsmittel, Hilfsmittel zur tert. Förderung von Erdöl oder zur Fließwiderstandsreduzierung. Die Wirksamkeit der Polymerisate wird durch die Anwesenheit der Alkalicarbonate bzw. Hydrogencarbonate nicht nachteilig beeinflußt.

Die in den Beispielen angegebenen Teile sind Gewichtsteile, die Angaben in Prozent beziehen sich auf das Gewicht der Stoffe. Die K-Werte wurden nach H. Fikentscher, Cellulose Chemie *13*, 58 bis 64 und 71 bis 74 (1932) 0,1 %ig in 5 %iger wäßriger Kochsalzlösung bei einer Temperatur von 25 °C gemessen ; dabei bedeutet $K = k \cdot 10^3$.

Polymerisat 1

In einem beheizbaren Polymerisationsgefäß, das mit Rührer, Zulaufbehälter, einem Wasserauskreiser und Stickstoffeinleitungsvorrichtung versehen war, wurde ein Gemisch aus 225 Teilen Benzol, 1 Teil Tetrachlorkohlenstoff und 14 Teilen eines üblicherweise ethoxylierten Talgfettsäureamids vorgelegt und zum Sieden erhitzt. In die siedende Lösung ließ man unter Rühren innerhalb von 2 Stunden ein Gemisch aus 40 %igen von wäßrigen Lösungen von 60 Teilen Acrylamid und 40 Teilen Natriumacrylat sowie 4 Teile einer wäßrigen Lösung von 0,1 Teilen Kaliumperoxidisulfat einlaufen. Nach Ende des Zulaufs der Monomerenlösung erhitzte man das Reaktionsgemisch noch 1 Stunde zum Sieden, ließ die Reaktionsmischung abkühlen und filtrierte dann etwa die Hälfte der Polymerteilchen ab. Diese Polymerteilchen enthielten 61 %Wasser und bestanden aus einem Copolymerisat aus 60 % Acrylamid und 40 % Natriumacrylat, das einen K-Wert von 280 hatte. Die mittlere Teilchengröße der Perlen betrug 400 μm.

Polymerisat 2

Das bei der Herstellung des Polymerisates 1 im Polymerisationgefäß verbliebene teilchenförmige Polymerisat wurde azeotrop bis auf einen Wassergehalt von 5 % entwässert.

Polymerisat 3

Durch Lösungspolymerisation in Wasser wurde ein Polymergel aus 70 % Acrylamid und 30 % Natriumacrylat hergestellt. Der Wassergehalt des Polymergels betrug 85 %, der K-Wert des Copolymerisates 290.

Polymerisat 4

Das Polymerisat 3 wurde zerkleinert und auf einem Wirbelbett bei einer Lufttemperatur von 130 °C getrocknet. Der Wassergehalt betrug 8 %, die mittlere Teilchengröße 300 μm.

Beispiel 1

Das Polymerisat 1 wurde mit den in Tabelle 1 angegebenen Mengen an Natriumcarbonat homogen gemischt, indem man es mit einer wäßrigen Natriumcarbonatlösung in Kontakt brachte und die Mischung bei einer Temperatur von 50 °C 10 Minuten lang rührte. Danach wurde die Mischung azeotrop getrocknet, wobei man als Schleppmittel ein Gemisch aus 225 Teilen Benzol und 1 Teil Tetrachlorkohlenstoff verwendete. Der Wassergehalt der Mischung betrug 4 %. Die Teilchengröße des Copolymerisates änderte sich bei der Behandlung mit der wäßrigen Natriumcarbonatlösung nicht.

Um die Auflösungsgeschwindigkeit der so erhaltenen Mischung zu prüfen, wurde eine 0,1 %ige wäßrige Polymerlösung hergestellt, indem man 0,2 g des Natriumcarbonat enthaltenden Copolymerisates in 200 Teilen destilliertem Wasser löste. Für die Lösungsversuche verwendete man ein Becherglas und rührte den Inhalt des Becherglases mit einem Magnetrührer. Nach 10 min wurde die Lösung filtriert, wobei man ein Filter aus Nylon der Maschenweite 90 μm verwendete. Der Filterrückstand wurde im Vakuumtrockenschrank bei 100 °C getrocknet und gewogen. In Tabelle 1 sind die ungelösten Anteile in Prozent angegeben, die nach 10 min Lösezeit abfiltriert wurden.

Tabelle 1

| % Natriumcarbonat, bezogen auf Polymerisat 1 | Ungelöster Polymerisat-Anteil nach 10 min |
|---|---|
| 0,25 | 10 % |
| 0,5 | 9,5 % |
| 1,0 | 6,0 % |

Vergleichsbeispiel 1

Nach der im Beispiel 1 angegebenen Verfahrensweise für die Prüfung der Auflösungsgeschwindigkeit der Mischung aus Polymer und Natriumcarbonat wurde die Auflösungsgeschwindigkeit des Polymerisates 2 bestimmt. Nach einer Lösezeit von 10 min betrug die auf dem Filter zurückgebliebene Menge des nichtgelösten Polymerisats 75 % der Ausgangsmenge.

Beispiel 2

Das Polymerisat 3 wurde mit 0,25 % wasserfreier Soda versetzt und in einer Schneidmühle zerkleinert. Nach einer Zeit von 15 min war das Natriumcarbonat im Polymergel homogen verteilt. Die Mischung wurde anschließend in einem Luftstrom, der eine Temperatur von 130 °C hatte, getrocknet. Danach betrug der Wassergehalt der feinteiligen Mischung 7 %. Nach der im Beispiel 1 angegebenen Methode wurde der Anteil bestimmt, der nach 10 min zur Herstellung einer 0,1 %igen wäßrigen Polymerlösung noch ungelöst war. Er betrug 15,5 %.

Vergleichsbeispiel 2

Nach der im Beispiel 1 angegebenen Methode wurde das Löseverhalten des Polymerisates 4 bestimmt. Bei der Herstellung einer 0,1 %igen wäßrigen Lösung waren nach einer Lösezeit von 10 min noch 60 % des Polymerisates 4 ungelöst.

Beispiel 3

Das Polymerisat 1 wurde mit 1 % Natriumhydrogencarbonat (als 10 %ige wäßrige Lösung) in Kontakt gebracht und bei 50 °C für 10 Minuten gerührt. Danach wurde die Mischung azeotrop getrocknet, wobei man als Schleppmittel ein Gemisch aus 225 Teilen Benzol und 1 Teil Tetrachlorkohlenstoff verwendet. Der Wassergehalt der Mischung betrug 4 %. Der nach 10 Minuten ungelöste Anteil betrug 8,8 %.

**Patentansprüche**

1. Verfahren zur Erhöhung der Auflösungsgeschwindigkeit von feinteiligen, hochmolekularen (Meth)acrylamidpolymerisaten, die ggf. anionische Monomere einpolymerisiert enthalten, wobei die anionischen Gruppen der Polymerisate als Alkali- oder Erdalkalisalze vorliegen, in Wasser durch Mischen der Polymerisate mit wasserlöslichen anorganischen Salzen in Gegenwart von Masser, dadurch gekennzeichnet, daß man feinteilige, wasserlösliche Polymerisate, die als Gel vorliegen, einen Wassergehalt von 40 bis 90 Gew.-% und eine Teilchengröße von 50 bis 2 000 μm haben, mit 0,1 bis 8 Gew.-%, bezogen auf die Polymerisate, eines Alkali- und/oder Ammoniumcarbonats und/oder Alkali- und/oder Ammoniumhydrogencarbonats homogen mischt und die Mischung anschließend trocknet.

2. Verfahren nach Anspruch 1, dadurch gekennzeichnet, daß das feinteilige, Wasser enthaltende gelförmige Polymerisat nach dem Verfahren der umgekehrten Suspensionspolymerisation hergestellt ist.

3. Verfahren nach den Ansprüche 1 und 2, dadurch gekennzeichnet, daß die homogene Mischung durch azeotropes Abdestillieren des Wassers getrocknet wird.

4. Verfahren nach den Ansprüchen 1 bis 3, dadurch gekennzeichnet, daß als feinteilige Wasser enthaltende Gele Homopolymerisate des Acrylamids oder Copolymerisate aus Acrylamid und Natriumacrylat verwendet werden.

**Claims**

1. A process for increasing the rate of dissolution, in water, of a finely divided high molecular weight acrylamide or methacrylamide polymer which may or may not contain anionic monomers as copolymerized units and in which the anionic groups are present as alkali metal or alkaline earth metal salts, by mixing the polymer with a water-soluble inorganic salt in the presence of water, wherein the finely divided, water-soluble polymer, which is present in the form of a gel, contains from 40 to 90 % by weight of water, and has a particle size of from 50 to 2 000 μm, is mixed homogeneously with from 0.1 to 8 % by weight, based on the polymer, of an alkali metal carbonate and/or ammonium carbonate and/or an alkali metal bicarbonate and/or ammonium bicarbonate, and the mixture is then dried.

2. A process as claimed in claim 1, wherein the finely divided, water-containing, gel-like polymer is prepared by reverse suspension polymerization.

3. A process as claimed in claims 1 and 2, wherein the homogeneous mixture is dried by distilling off the water azeotropically.

4. A process as claimed in claims 1 to 3, wherein the finely divided, water-containing gel used is an acrylamide homopolymer or a copolymer of acrylamide with sodium acrylate.

**Revendications**

1. Procédé pour accroître la vitesse de dissolution dans l'eau de polymères de (méth)acrylamide de poids moléculaire élevé finement divisés, qui contiennent éventuellement des monomères anioniques en liaison polymère, les groupements anioniques des polymères se présentant sous la forme de sels alcalins ou alcalinoterreux, par mélange des polymères avec des sels inorganiques hydrosolubles en présence d'eau, caractérisé en ce qu'on mélange de façon homogène des polymères hydrosolubles finement divisés, qui se présentent sous forme de gel, ont une teneur en eau de 40 à 90 % en poids et une grosseur de particules de 50 à 2 000 μm, avec 0,1 à 8 % en poids, sur la base des polymères, d'un carbonate alcalin et/ou d'ammonium et/ou d'un hydrogénocarbonate alcalin et/ou d'ammonium, puis on sèche le mélange.

2. Procédé selon la revendication 1, caractérisé en ce que le polymère finement divisé, sous forme de gel contenant de l'eau, est préparé suivant le procédé de la polymérisation en suspension inversée.

3. Procédé selon la revendication 1 ou 2, caractérisé en ce que le mélange homogène est séché par élimination de l'eau par distillation azéotropique.

4. Procédé selon l'une quelconque des revendications 1 à 3, caractérisé en ce qu'on utilise, en tant que gels finement divisés contenant de l'eau, des homopolymères de l'acrylamide ou des copolymères d'acrylamide et d'acrylate de sodium.